# EUROPEAN PATENT APPLICATION

(11) **EP 2 866 177 A1**
(43) Date of publication of application: **29.04.2015**
(21) Application number: 14275076.9
(22) Date of filing: 17.03.2014
(51) Int. Cl.: G06Q 10/08, G06Q 30/02, G06Q 30/06

(54) **Method of grouping electronic tags and method of managing group IDs**

(30) Priority: 28.10.2013 KR 20130128614
(71) Applicant: Samsung Electro-Mechanics Co., Ltd., Suwon-Si, Gyeonggi-Do 443-743 (KR)
(72) Inventor: Yoon, Dae Gil, 443-743 Gyeonggi-Do (KR); Kim, Su Jong, 443-743 Gyeonggi-Do (KR); Lee, Chung Hee, 443-743 Gyeonggi-Do (KR)
(74) Representative: Potter Clarkson LLP

(57) **Abstract**

Disclosed herein are a method of grouping electronic tags and a method of managing group IDs. A method of grouping a plurality of electronic tags transmitting and receiving product information to and from a server through a coordinator includes: generating, by each electronic tag, a temporary group ID (Temp GID); and transmitting a signal S including the Temp GID to another electronic tag in the vicinity of the electronic tag and entering a mode of receiving the signal S transmitted by another electronic tag.

## Description

### CROSS REFERENCE(S) TO RELATED APPLICATIONS

This application claims the foreign priority benefit of Korean Patent Application Serial No. 10-2013-0128614, entitled "Method of Grouping Electronic Tags and Method of Managing Group IDs" filed on October 28, 2013, which is hereby incorporated by reference in its entirety into this application.

### BACKGROUND OF THE INVENTION

### 1. Technical Field

The present invention relates to an electronic shelf label (ESL), and more particularly, to a method of grouping electronic tags used in an electronic shelf label system and a method of managing group IDs set by the same.

### 2. Description of the Related Art

Generally, a large or small and medium shop has used a scheme of attaching papers on which prices are printed to a shelf on which products are displayed in order to guide the prices of the products. However, in this scheme, papers on which prices are printed should be attached to the shelf on which products are displayed whenever the prices are changed, which is troublesome. As one method of solving this problem, an electronic shelf label (ESL) system has been recently used widely.

The ESL system may be basically configured to include a central server managing and controlling the entire system and storing product information, an electronic tag (also called an ESL tag) mounted on a shelf of a product display stand and displaying the product information, and a coordinator transferring communication between the central server and the electronic tag.

Here, the product display stand displays products classified into a plurality of items. Therefore, the number of electronic tags displaying information of each product may be several hundred to several thousand depending on the number of products.

Therefore, since it is very inefficient in view of power or communication to simultaneously communicate with all of the electronic tags in the shop, the following Patent Document 1 (Korean Patent Laid-Open Publication No. 10-2010-0048205) suggests that a plurality of electronic tags are grouped and managed in a group unit.

However, since the electronic tags are positioned to be adjacent to each other in the shop, ranges of communication regions designated in the group unit may be overlapped with each other. In order to solve this problem, a method of sufficiently securing a distance between shelves may be used. However, this method causes space to be wasted.

### [Related Art Document]

### [Patent Document]

(Patent Document 1) Korean Patent Laid-Open Publication No. 10-2010-0048205

### SUMMARY OF THE INVENTION

An object of the present invention is to provide a method of grouping electronic tags capable of grouping electronic tags adjacent to each other without allowing communication regions to be overlapped with each other.

According to an exemplary embodiment of the present invention, there is provided a method of grouping a plurality of electronic tags transmitting and receiving product information to and from a server through a coordinator, including: generating, by each electronic tag, a temporary group ID (Temp GID); transmitting a signal S including the Temp GID to another electronic tag in the vicinity of the electronic tag and entering a mode of receiving the signal S transmitted by another electronic tag; judging whether or not a characteristic value of the received transmission signal S of another electronic tag has exceeded a threshold value when the transmission signal S of another electronic tag is received; and comparing a magnitude of the Temp GID of the electronic tag with that of a Temp GID of another electronic tag included in the received transmission signal S of another electronic tag when it is judged that the characteristic value of the received transmission signal S of another electronic tag has exceeded the threshold value, thereby setting a final group ID.

The transmitting may be performed in a broadcast scheme.

The method may further include, before the generating, judging whether or not signal transmission with the server is performed in a preset standby time t1; and setting a group ID included in the transmission signal of the server to a group ID of the electronic tag when the signal transmission with the server is performed.

The method may further include generating the temporary group ID (Temp GID) when the signal transmission with the server is not performed in the preset standby time t1.

The method may further include, after the entering, judging whether or not a preset standby time t2 has elapsed.

The method may further include judging whether or not the transmission signal S of another electronic tag has been received before the preset standby time t2 elapses.

The method may further include judging whether or not the characteristic value of the received transmission signal S of another electronic tag has exceeded a threshold value when the transmission signal S of another electronic tag has been received before the preset standby time t2 elapses and judging whether or not the preset standby time t2 has elapsed when the transmission signal S of another electronic tag has not been received.

The method may further include judging whether or not the preset standby time t2 has elapsed when it is judged in the judging that the characteristic value of the received transmission signal S of another electronic tag is the threshold value or less.

The method may further include judging whether or not the preset standby time t2 has elapsed when the magnitude of the Temp GID of the electronic tag is equal to or smaller than that of a Temp GID of another electronic tag included in the received transmission signal S of another electronic tag in the comparing.

The method may further include updating the Temp GID of another electronic tag to the Temp GID of the electronic tag and then judging whether or not the preset standby time t2 has elapsed, when the magnitude of the Temp GID of the electronic tag is larger than that of a Temp GID of another electronic tag included in the received transmission signal S of another electronic tag in the comparing.

The method may further include setting the Temp GID of the electronic tag to a final group ID when the preset standby time t2 elapses.

According to another exemplary embodiment of the present invention, there is provided a method of managing group IDs, including: transmitting, by a coordinator, registration commands to electronic tags of which final group IDs are set by the method as described above; and transmitting, by the electronic tags receiving the registration commands, signals corresponding to the registration commands to the coordinator to register their group IDs.

The coordinator may transmit the registration commands in a group unit and transmit the registration commands in a sequence in which magnitudes of the group IDs are small.

The electronic tags in the same group receiving the registration commands may transmit signals corresponding to the registration commands to the coordinator in a sequence in which media access control (MAC) addresses are small.

According to still another exemplary embodiment of the present invention, there is provided a method of managing group IDs, including: determining, by a coordinator, a group of which a group ID is to be changed in the case in which final group IDs set by the method as described above are overlapped with each other between groups; and transmitting change commands to electronic tags in the group of which the group ID is to be changed.

The coordinator may determine the group of which the group ID is to be changed by comparing the numbers of electronic tags in the groups having the overlapped group ID with each other.

The coordinator may transmit the change commands in a broadcast scheme.

According to yet still another exemplary embodiment of the present invention, there is provided a method of managing group IDs, including: entering a mode in which newly added electronic tags receive a transmission signal of a server in the case in which electronic tags are newly added into a group of which a final group ID is set by the method as described above; receiving the transmission signal of the server transmitted to the group to which the newly added electronic tags belong; and extracting a group ID included in the transmission signal of the server to set the extracted group ID to a group ID of the newly added electronic tags.

### BRIEF DESCRIPTION OF THE DRAWINGS

FIG. 1 is a configuration diagram of an electronic shelf label system;
FIG. 2 is a flow chart sequentially showing a method of grouping electronic tags according to an exemplary embodiment of the present invention;
FIG. 3 is a flow chart sequentially showing a method of registering group IDs according to the exemplary embodiment of the present invention;
FIG. 4 is a flow chart sequentially showing a method of changing overlapped group IDs according to the exemplary embodiment of the present invention; and
FIG. 5 is a flow chart sequentially showing a method of registering group IDs of newly added electronic tags.

### DESCRIPTION OF THE PREFERRED EMBODIMENTS

Various advantages and features of the present invention and methods accomplishing thereof will become apparent from the following description of exemplary embodiments with reference to the accompanying drawings. However, the present invention may be modified in many different forms and it should not be limited to exemplary embodiments set forth herein. These exemplary embodiments may be provided so that this disclosure will be thorough and complete, and will fully convey the scope of the invention to those skilled in the art.

Meanwhile, terms used in the present specification are for explaining the embodiments rather than limiting the present invention. Unless explicitly described to the contrary, a singular form includes a plural form in the present specification. The word "comprise" and variations such as "comprises" or "comprising," will be understood to imply the inclusion of stated constituents, steps, operations and/or elements but not the exclusion of any other constituents, steps, operations and/or elements.

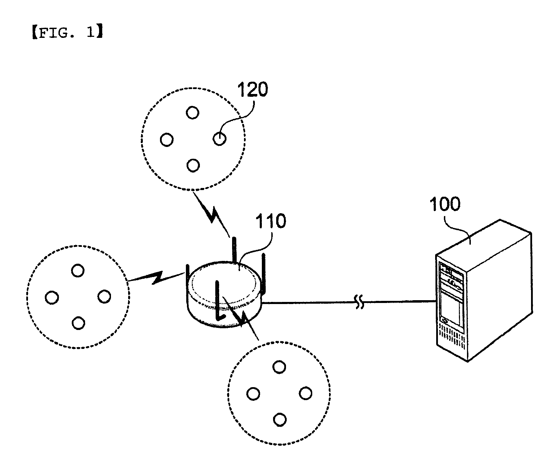

FIG. 1 is a configuration diagram of an electronic shelf label system. The present invention relates to an electronic shelf label (ESL) system basically configured to include a server 100, a plurality of electronic tags 120, and a coordinator 110 transferring communication between the server 100 and the electronic tags 120. First, the respective components of the ESL system will be described. The server 100 serves to store information, for example, a price, an expiration date, a production date, and the like, associated with products displayed in a shop. Further, in the case in which a content displayed on the electronic tag 120 should be changed due to a change in the product information, the server transmits a data signal including the changed information to the electronic tag 120 through the coordinator 110. The server 100 may interwork a point of sale (POS) system, or the like, to obtain sale related information of products in the shop in real time.

The coordinator 110 receives the data signals including the product information from the server 100 and transfers the data signals to the plurality of electronic tags 120. For example, the coordinator 110 may be connected to the server 100 by a wired or wireless local area network (LAN) to receive the data including the product information from the server 100 through communication in a transfer control protocol/Internet protocol (TCP/IP) scheme. In addition, the coordinator 110 may wirelessly communicate with the electronic tags 120 using some of communication protocols defined in Zigbee, and the like, in order to simultaneously transmit the data signals including the product information to the plurality of electronic tags 120. As described above, the coordinator 110 may include a receiver in a wired or wireless LAN scheme as a receiver for receiving the data signals from the server 100 and a transmitter in a Zigbee scheme as a transmitter for transmitting the data signals to the plurality of electronic tags 120.

The electronic tag 120 functions as a label attached to a product display stand in the shop to display the product information. To this end, the electronic tag 120 may include a small display panel such as a black and white or color liquid crystal display (LCD), an electronic paper (e-paper), or the like, and a transceiver performing wireless communication with the coordinator 110.

Generally, the electronic tag 120 is repeatedly in a wake-up state and a sleep state in order to decrease power consumption. That is, the transceiver may be periodically turned on/off in the state in which data to be received from the coordinator 100 are not present. In the case in which a message to be transmitted from the coordinator 110 to the electronic tag 120 is present, the coordinator 110 transmits a wake-up signal, and the electronic tag 120 receiving the wake-up signal transmitted from the coordinator 110 does not turn off the transceiver, but continuously maintains the transceiver in a turn-on state to receive the data including the product information transmitted after the wake-up signal. The above-mentioned wake-up scheme is applied, thereby making it possible to effectively decrease consumption of power required for communication.

The present invention suggests a method of grouping electronic tags 120 for operating the plurality of electronic tags 120 in a group unit in the ESL system configured as described above and a method of managing group IDs set by the same. Hereinafter, a configuration and an acting effect of exemplary embodiments of the present invention will be described in more detail with reference to the accompanying drawings.

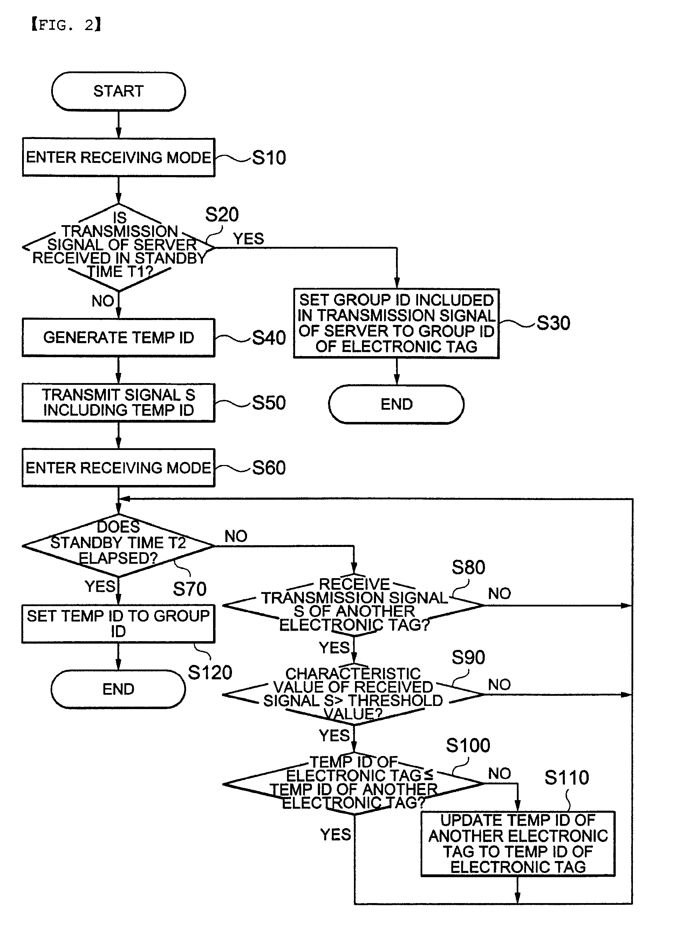

FIG. 2 is a flow chart sequentially showing a method of grouping electronic tags according to an exemplary embodiment of the present invention.

Referring to FIG. 2, in the method of grouping electronic tags according to the exemplary embodiment of the present invention, first, the electronic tag enters a receiving mode (S10) to judge whether or not signal transmission with the server is performed, that is, a signal transmitted from the server is received, within a preset standby time t1 (S20).

In this process, which is a process of confirming whether or not a communication group has been set through initial communication with the server in advance, when the electronic tag is included in a single communication group, the electronic tag may be allocated with a group ID indicating a group to which it belongs through signal transmission with the server communicating with its group. Further, in the case in which the electronic tag receives the wake-up signal or the data signal from the coordinator, the electronic tag confirms whether or not a corresponding signal is a signal for a group to which it belongs through the allocated group ID, such that normal communication is performed.

Therefore, when it is judged that the signal transmission with the server has been performed within the preset standby time t1, the electronic tag sets a group ID included in the transmission signal of the server to its group ID (S30). Then, the method of grouping electronic tags according to the exemplary embodiment of the present invention ends.

When the signal transmission with the server is performed within the preset standby time t1, it may be judged that the electronic tag is not set to any communication group, and the electronic tag may be grouped together with an electronic tag adjacent thereto by the following process to thereby be allocated with a group ID.

To this end, first, a temporary group ID (hereinafter, referred to as a Temp GID) is generated (S40). In this process, which is a process performed by all electronic tags that do not perform the signal transmission with the server within the preset standby time t1, the Temp GID may be generated as, for example, any one of natural numbers.

Then, the electronic tag transmits a signal S including the Temp GID to another electronic tag positioned in the vicinity of the electronic tag (S50) and enters a mode in which it receives a signal S transmitted from another electronic tag (S60).

For example, a first electronic tag transmits a signal S including its Temp GID to a second electronic tag positioned in the vicinity of the first electronic tag, and the second electronic tag also transmits a signal S including its Temp GID to the first electronic tag positioned in the vicinity of the second electronic tag. In addition, the first electronic tag enters a mode in which it receives the transmission signal S of the second tag. Likewise, the second electronic tag enters a mode in which it receives the transmission signal S of the first electronic tag. Although only two electronic tags have been described by way of example, several ten to several hundred electronic tags are operated as described above. Therefore, a transmission scheme of the electronic tags may be a broadcast scheme.

In addition, when the electronic tag enters the receiving mode, it is judged whether or not a preset standby time t2 has elapsed (S70).

The standby time t2 is to set a kind of time limit for the subsequent processes (S80 to S110) operated in a loop scheme. When the standby time t2 is excessively short, a process for setting the group ID may not be sufficiently performed. To the contrary, when the standby time t2 is excessively long, a calculation amount is increased, such that an overload may be generated in the system. Therefore, it is preferable that the standby time is appropriately set in consideration of this situation.

It is judged whether or not the transmission signal S of another electronic tag has been received before the standby time t2 elapses (S80). When it is judged that the transmission signal S of another electronic tag has been received before the standby time t2 elapses, the following processes are performed, and when it is judged that the transmission signal S of another electronic tag has not been received before the standby time t2 elapses, the electronic tag returns to S70 to continuously judge whether or not the transmission signal S of another electronic tag has been received until the standby time t2 elapses.

When the transmission signal S of another electronic tag is received before the standby time t2 elapses, it is judged whether or not a characteristic value, for example, a received signal strength indication (RSSI) value, of the received signal S has exceeded a predetermined threshold value (S90).

Generally, when any physical obstacle is not present between a signal receiving device and a signal transmitting device, a signal characteristic value of the signal transmitting device received by the signal receiving device becomes small as a distance between the signal receiving device and the signal transmitting device becomes distant. Therefore, it is judged in S90 that the characteristic value of the received signal S has exceeded the predetermined threshold value, it may be judged that another electronic tag is positioned at a position adjacent to the electronic tag.

Therefore, for example, in the case in which a characteristic value of the transmission signal S of the second electronic tag received by the first electronic tag exceeds the predetermined threshold value, it may be considered that the first and second electronic tags are adjacent to each other within a communication range corresponding to the threshold value, and the subsequent processes for setting a group ID for the first and second electronic tags are performed, thereby making it possible to group electronic tags adjacent to each other.

When it is judged in S90 that the characteristic value of the received signal S has not exceeded the predetermined threshold value, it may be considered that another electronic tag (for example, the second electronic tag) and the electronic tag (for example, the first electronic tag) receiving the transmission signal S of another electronic tag are distant from each other. In this case, the first electronic tag returns to S70 to continuously judge whether or not the transmission signal S of another electronic tag has been received until the standby time t2 elapses.

When it is judged that the characteristic value of the received transmission signal S of another electronic tag has exceeded the predetermined threshold value, a magnitude of the Temp GID of the electronic tag is compared with that of a Temp GID of another electronic tag included in the received transmission signal S of another electronic tag (S100).

In addition, when the magnitude of the Temp GID of the electronic tag is equal to or smaller than that of the Temp GID of another electronic tag depending on the comparison, the electronic tag returns to S70, and when the magnitude of the Temp GID of the electronic tag is larger than that of the Temp GID of another electronic tag depending on the comparison, after the Temp GID of another electronic tag is updated to the Temp GID of the electronic tag, the electronic tag returns to S70 (S110).

That is, in S100 and S110, which are processes of allocating the same Temp GID for setting the electronic tags judged to be adjacent to each other in S90 to the same group ID, the electronic tags adjacent to each other depending on the comparison are updated to a Temp GID having the smallest magnitude among the Temp GIDs.

For example, in the case in which a magnitude of a Temp GID temporarily generated by the first electronic tag is 2 and a magnitude of a Temp GID temporarily generated by the second electronic tag is 3, the first electronic tag returns to S70 without being separately updated and the second electronic tag returns to S70 after updating its Temp GID to 2.

In addition, when the standby time t2 elapses in S70, the Temp GID of the electronic tag is set to a final group ID (S120), and the method of grouping electronic tags according to the exemplary embodiment of the present invention ends.

In the case of setting the group ID by the method of grouping electronic tags described up to now, electronic tags geographically adjacent to each other, for example, electronic tags attached to the same shelf in a shop are set to and are grouped by the same group ID. Therefore, several hundred to several thousand electronic tags in the shop may be efficiently managed based on positions thereof.

Further, in S90, a threshold value for a signal characteristic value is set to a higher value, thereby making it possible to narrow a communication range. Therefore, the electronic tags may be grouped in a more minute range.

Hereinafter, a method of managing group IDs set by the method of grouping electronic tags as described above will be described.

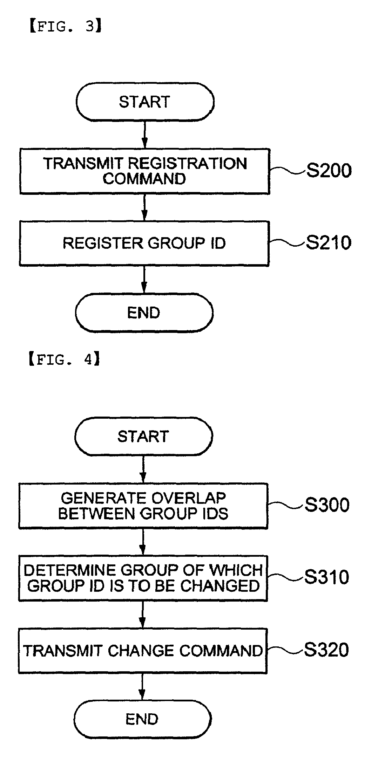

Here, an example of the method of managing group IDs may include a method of registering set group IDs, a method of changing overlapped group IDs, and a method of setting group IDs of electronic tags newly added after grouping. Hereinafter, each of the above-mentioned methods will be described with reference to FIGS. 3 to 5.

FIG. 3 is a flow chart sequentially showing a method of registering group IDs according to the exemplary embodiment of the present invention. In the method of registering group IDs, the coordinator first transmits registration commands to electronic tags of which final group IDs are set by the method of grouping electronic tags according to the exemplary embodiment of the present invention described above (S200).

The electronic tags receiving the registration commands transmitted from the coordinator transmits signals corresponding to the registration commands to the coordinator to register their group IDs in the coordinator (S210). In this case, when group IDs of all electronic tags are registered at a time, an overload may be generated in the system. Therefore, according to the exemplary embodiment of the present invention, the registration commands may be transmitted in a group unit and be transmitted in a sequence in which magnitudes of the group IDs are small. Alternatively, the registration commands may also be transmitted in a sequence in which magnitudes of the group IDs are large. As described above, in the method of grouping electronic tags according to the exemplary embodiment of the present invention, since the electronic tags transmit the signals S including the temporarily generated Temp GIDs in a broadcasting scheme, the coordinator may recognize valid group IDs of the electronic tags in advance.

In addition, the electronic tags in the same group receiving the registration commands transmit signals corresponding to the registration commands to the coordinator in a sequence in which media access control (MAC) addresses are small or large, thereby registering their group IDs. Therefore, even though several hundred electronic tags are included in any one group, group IDs may be more stably registered without generating an overload in the system.

FIG. 4 is a flow chart sequentially showing a method of changing overlapped group IDs according to the exemplary embodiment of the present invention.

In the method of grouping electronic tags as described above, since magnitudes of Temp GIDs of only electronic tags judged to be adjacent to each other in S90 are compared with each other and a group ID is set to the smallest Temp among the Temp GIDs, for example, in the case in which the smallest Temp GID among Temp GIDs of electronic tags belonging to a first group and the smallest Temp GID among Temp GIDs of electronic tags belonging to a second group are the same as each other, group IDs of the first and second groups may be overlapped with each other (S300).

Therefore, a group ID of any one of the first and second groups needs to be changed. According to the exemplary embodiment of the present invention, in order to change the group ID of any one of the first and second groups, the coordinator determines a group of which a group ID is to be changed (S310) and then transmits change commands to electronic tags in the group of which the group ID is to be changed (S320). Here, the coordinator transmits the change commands in a broadcast scheme, such that a group ID of all electronic tags in the group may be collectively changed.

Here, it is important to determine a group ID of which group is to be changed. According to the exemplary embodiment of the present invention, a group of which a group ID is to be changed may be determined by comparing the numbers of electronic tags belonging to groups with each other.

That is, the coordinator may compare the numbers of electronic tags each belonging to first and second groups having an overlapped group ID with each other and transmit change commands to a group including a smaller number of electronic tags. Alternatively, the coordinator may also transmit change commands to a group including a larger number of electronic tags. However, in this case, as the number of electronic tags of which the group ID is to be changed is increased, an amount of calculation is increased. Therefore, it is preferable that the coordinator transmits the change commands to the group including the smaller number of electronic tags.

Finally, a method of registering group IDs of electronic tags newly added after the method of grouping electronic tags according to the exemplary embodiment of the present invention will be described.

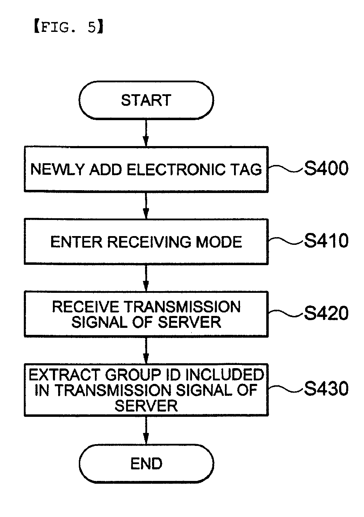

FIG. 5 is a flow chart sequentially showing a method of registering group IDs of newly added electronic tags. First, when electronic tags are newly added into a group of which a final group ID is set by the method of grouping electronic tags according to the exemplary embodiment of the present invention (S400), the newly added electronic tags extract a group ID included in a signal transmitted from the server to a corresponding group.

More specifically, the newly added electronic tags enter a receiving mode (S410) to receive a signal frame transmitted by the server in a normal state (S420) and extract a group ID included in the signal frame to set the extracted group ID to a group ID of the newly added electronic tags (S430).

According to the exemplary embodiment of the present invention, since only electronic tags adjacent to each other may be grouped without allowing communication regions to be overlapped with each other, several hundred to several thousand electronic tags in a shop may be efficiently managed based on positions thereof.

In addition, a range of a communication region may be controlled depending on a magnitude of a threshold value, thereby making it possible to minutely group electronic tags. As a result, the electronic tags may be more efficiently managed.

The present invention has been described in connection with what is presently considered to be practical exemplary embodiments. Although the exemplary embodiments of the present invention have been described, the present invention may be also used in various other combinations, modifications and environments. In other words, the present invention may be changed or modified within the range of concept of the invention disclosed in the specification, the range equivalent to the disclosure and/or the range of the technology or knowledge in the field to which the present invention pertains. The exemplary embodiments described above have been provided to explain the best state in carrying out the present invention. Therefore, they may be carried out in other states known to the field to which the present invention pertains in using other inventions such as the present invention and also be modified in various forms required in specific application fields and usages of the invention. Therefore, it is to be understood that the invention is not limited to the disclosed embodiments. It is to be understood that other embodiments are also included within the spirit and scope of the appended claims.

## Claims

1. A method of grouping a plurality of electronic tags transmitting and receiving product information to and from a server through a coordinator, comprising:
generating, by each electronic tag, a temporary group ID (Temp GID);
transmitting a signal S including the Temp GID to another electronic tag in the vicinity of the electronic tag and entering a mode of receiving the signal S transmitted by another electronic tag;
judging whether or not a characteristic value of the received transmission signal S of another electronic tag has exceeded a threshold value when the transmission signal S of another electronic tag is received; and
comparing a magnitude of the Temp GID of the electronic tag with that of a Temp GID of another electronic tag included in the received transmission signal S of another electronic tag when it is judged that the characteristic value of the received transmission signal S of another electronic tag has exceeded the threshold value, thereby setting a final group ID.

2. The method according to claim 1, wherein the transmitting is performed in a broadcast scheme.

3. The method according to claim 1, further comprising, before the generating,
judging whether or not signal transmission with the server is performed in a preset standby time t1; and
setting a group ID included in the transmission signal of the server to a group ID of the electronic tag when the signal transmission with the server is performed.

4. The method according to claim 3, further comprising generating the temporary group ID (Temp GID) when the signal transmission with the server is not performed in the preset standby time t1.

5. The method according to claim 1, further comprising, after the entering, judging whether or not a preset standby time t2 has elapsed.

6. The method according to claim 5, further comprising judging whether or not the transmission signal S of another electronic tag has been received before the preset standby time t2 elapses.

7. The method according to claim 6, further comprising judging whether or not the characteristic value of the received transmission signal S of another electronic tag has exceeded a threshold value when the transmission signal S of another electronic tag has been received before the preset standby time t2 elapses and judging whether or not the preset standby time t2 has elapsed when the transmission signal S of another electronic tag has not been received.

8. The method according to claim 5, further comprising judging whether or not the preset standby time t2 has elapsed when it is judged in the judging that the characteristic value of the received transmission signal S of another electronic tag is the threshold value or less.

9. The method according to claim 5, further comprising judging whether or not the preset standby time t2 has elapsed when the magnitude of the Temp GID of the electronic tag is equal to or smaller than that of a Temp GID of another electronic tag included in the received transmission signal S of another electronic tag in the comparing.

10. The method according to claim 5, further comprising updating the Temp GID of another electronic tag to the Temp GID of the electronic tag and then judging whether or not the preset standby time t2 has elapsed, when the magnitude of the Temp GID of the electronic tag is larger than that of a Temp GID of another electronic tag included in the received transmission signal S of another electronic tag in the comparing.

11. The method according to claim 5, further comprising setting the Temp GID of the electronic tag to a final group ID when the preset standby time t2 elapses.

12. A method of managing group IDs, comprising:
transmitting, by a coordinator, registration commands to electronic tags of which final group IDs are set by the method according to any one of claims 1 to 11; and
transmitting, by the electronic tags receiving the registration commands, signals corresponding to the registration commands to the coordinator to register their group IDs.

13. The method according to claim 12, wherein the coordinator transmits the registration commands in a group unit and transmits the registration commands in a sequence in which magnitudes of the group IDs are small.

14. The method according to claim 13, wherein the electronic tags in the same group receiving the registration commands transmit signals corresponding to the registration commands to the coordinator in a sequence in which media access control (MAC) addresses are small.

15. A method of managing group IDs, comprising:
determining, by a coordinator, a group of which a group ID is to be changed in the case in which final group IDs set by the method according to any one of claims 1 to 11 are overlapped with each other between groups; and
transmitting change commands to electronic tags in the group of which the group ID is to be changed.

16. The method according to claim 15, wherein the coordinator determines the group of which the group ID is to be changed by comparing the numbers of electronic tags in the groups having the overlapped group ID with each other.

17. The method according to claim 15, wherein the coordinator transmits the change commands in a broadcast scheme.

18. A method of managing group IDs, comprising:
entering a mode in which newly added electronic tags receive a transmission signal of a server in the case in which electronic tags are newly added into a group of which a final group ID is set by the method according to any one of claims 1 to 11;
receiving the transmission signal of the server transmitted to the group to which the newly added electronic tags belong; and
extracting a group ID included in the transmission signal of the server to set the extracted group ID to a group ID of the newly added electronic tags.
